# DEMANDE DE BREVET EUROPEEN

(11) **EP 3 798 620 A1**
(43) Date de publication de la demande: **31.03.2021**
(21) Numéro de dépôt: 19199642.0
(22) Date de dépôt: 25.09.2019
(51) Int. Cl.: G01N 21/87, G01N 21/88, G02F 1/00

(54) **SYSTEME ET PROCEDE DE GESTION D'UN ECLAIREMENT D'UNE ZONE D'INTERET COMPRENANT AU MOINS UN OBJET SUSCEPTIBLE D'ETRE MANIPULE PAR UN UTILISATEUR**

(71) Demandeur: ETA SA Manufacture Horlogère Suisse, 2540 Grenchen (CH)
(72) Inventeur: DUBUGNON, Dominique, 1162 Saint-Prex (CH); BLATTER, Cédric, 1291 Commugny (CH)
(74) Mandataire: ICB SA

(57) **Abrégé**

L'invention concerne procédé de gestion d'un éclairement d'une zone d'intérêt (2) comportant au moins un objet (3) susceptible d'être manipulé par un utilisateur, ledit éclairement étant réalisé par un dispositif d'éclairage principal (5a, 5b, 5c) et un dispositif d'éclairage secondaire (6) pourvus tous deux d'éléments électroluminescents, le procédé comprenant les étapes suivantes :
- identification (20) dudit utilisateur et/ou de l'objet (3) ;
- configuration (21) de l'éclairement de la zone d'intérêt (2) en fonction du profil de l'utilisateur identifié relatif à la vision et/ou d'au moins une caractéristique de l'objet (3) identifié, ladite étape comprenant les sous-étapes suivantes :
• génération (22) d'une instruction de pilotage des propriétés d'éclairage du dispositif d'éclairage principal (5a, 5b, 5c) et/ou du dispositif d'éclairage secondaire (6) en fonction de critères de perception visuelle de l'objet (3) par l'utilisateur ;
• contrôle (25) du dispositif d'éclairage principal (5a, 5b, 5c) et/ou dudit dispositif d'éclairage secondaire (6) en fonction de ladite instruction de pilotage des propriétés d'éclairage.

## Description

### Domaine technique

L'invention concerne un procédé de gestion d'un éclairement d'une zone d'intérêt comprise dans un environnement de travail d'un utilisateur, la zone d'intérêt comprenant au moins un objet susceptible d'être manipulé par cet utilisateur, ainsi qu'un système mettant en œuvre ce procédé.

L'invention concerne une pièce d'un bâtiment comprenant un tel système.

### Arrière-plan technologique

Dans l'état de la technique de tels procédés de gestion d'un éclairement sont notamment mis en œuvre dans le cadre de processus d'examen visuel de pièces pour une identification éventuelle de défauts de ces dernières. De tels procédés prévoient classiquement un pilotage d'un dispositif d'éclairage visant à assurer un éclairement adapté d'une zone d'intérêt comprenant les pièces à examiner. Lors de ce pilotage, l'éclairement adapté de cette zone d'intérêt peut consister en la génération par ce dispositif d'éclairage d'une lumière invisible génératrice d'une fluorescence qui est apte à mettre en évidence l'existence de défauts révélé par l'émission d'une lumière fluorescente visible par un colorant d'une composition pénétrante préalablement appliquée sur ladite pièce et qui a été retenu dans les criques ou fissures de cette dernière.

Cependant de tels procédés ne sont pas adaptés pour participer à de tels processus d'examen visuel car ils sont souvent à l'origine de grande fatigue de la part des utilisateurs en charge du contrôle de ces pièces, engendrant ainsi une perte de concentration de ces derniers et donc un risque d'erreurs.

Il existe alors un besoin pour proposer une solution participant à la réalisation d'un éclairement optimisé d'une telle zone d'intérêt.

### Résumé de l'invention

Un but de l'invention est par conséquent de proposer un procédé qui permet d'améliorer l'éclairement d'une zone d'intérêt à partir d'un éclairement de cette zone qui est piloté de manière dynamique et automatique.

L'invention concerne un procédé de gestion d'un éclairement d'une zone d'intérêt comportant au moins un objet susceptible d'être manipulé par un utilisateur, ledit éclairement étant réalisé par un dispositif d'éclairage principal et un dispositif d'éclairage secondaire pourvus tous deux d'éléments électroluminescents, le procédé comprenant les étapes suivantes :
- identification dudit utilisateur et/ou de l'objet ;
- configuration de l'éclairement de la zone d'intérêt en fonction du profil de l'utilisateur identifié relatif à la vision et/ou d'au moins une caractéristique de l'objet identifié, ladite étape comprenant les sous-étapes suivantes :
   - génération d'une instruction de pilotage des propriétés d'éclairage du dispositif d'éclairage principal et/ou du dispositif d'éclairage secondaire en fonction de critères de perception visuelle de l'objet par l'utilisateur ;
   - contrôle du dispositif d'éclairage principal et/ou dudit dispositif d'éclairage secondaire en fonction de ladite instruction de pilotage des propriétés d'éclairage.

Ainsi de telles caractéristiques de l'invention permettent d'adapter de manière précise l'éclairage de cet objet en fonction de la perception visuelle spécifique de l'utilisateur et de la tâche à accomplir par ce dernier relativement à l'objet comme par exemple une tache portant sur un processus d'examen visuel de cet objet pour une identification éventuelle de défaut.

Dans d'autres modes de réalisation :
- la sous-étape de génération comprend une phase d'évaluation des critères de perception visuelle à partir de données de profil de vision relatives à l'utilisateur identifié et/ou de données de caractéristiques relatives l'objet identifié ;
- la sous-étape de génération comprend une phase de détermination d'une configuration des propriétés d'éclairage du dispositif d'éclairage principal et/ou du dispositif d'éclairage secondaire en fonction de ces critères de perception visuelle ;
- la sous-étape de contrôle comprend une phase de modification des propriétés d'éclairage des dispositifs d'éclairage principal et secondaire en fonction de ladite instruction de pilotage ;
- le procédé comprend une étape de réévaluation de ces critères de perception visuelle de l'objet par l'utilisateur comportant une sous-étape d'identification d'un état de fatigue et/ou d'une gêne visuelle de l'utilisateur susceptible d'altérer sa perception visuelle de l'objet ;
- l'étape de réévaluation comprend une sous-étape de correction des critères de perception visuelle si un état de fatigue et/ou une gêne visuelle de l'utilisateur est identifié ;
- les propriétés d'éclairage des dispositifs d'éclairage principal et secondaire, comprennent :
   - un spectre lumineux de chaque élément électroluminescent constituant chacun de ces dispositifs d'éclairage ;
   - une intensité/amplitude du rayonnement lumineux de chaque d'élément électroluminescent constituant chacun de ces dispositifs d'éclairage ;
   - une orientation et/ou une diffusion du rayonnement lumineux produit par l'ensemble des éléments électroluminescents constituant chacun de ces dispositifs d'éclairage.

L'invention concerne aussi un système de gestion d'un éclairement d'une zone d'intérêt comportant au moins un objet susceptible d'être manipulé par un utilisateur mettant en œuvre le procédé selon l'une quelconque des revendications précédentes, comprenant :
- un dispositif d'éclairage principal et un dispositif d'éclairage secondaire aptes à réaliser ledit éclairement et qui sont pourvus tous deux d'éléments électroluminescents, et
- une unité de traitement reliée à des dispositifs d'identification des utilisateurs et des objets ainsi qu'à une base de données comprenant des données de profil de vision d'utilisateurs, des données de caractéristiques d'objets et des données d'identification d'utilisateurs et d'objets.

Dans d'autres modes de réalisation :
- le dispositif d'éclairage principal comprend un premier module d'éclairage et/ou un deuxième module d'éclairage pourvus tous les deux :
   - d'une pluralité d'éléments électroluminescents, ou
   - d'un unique élément électroluminescent qui est couplé à un modulateur ;
- le premier module d'éclairage est agencé au-dessus de la zone d'intérêt notamment au plus près de cette zone et le deuxième module d'éclairage est défini en tout ou partie autour de la zone d'intérêt ;
- le dispositif d'éclairage principal comprend un panneau présentant des propriétés de réflectance du rayonnement lumineux provenant du premier module d'éclairage vers la zone d'intérêt ;
- le dispositif d'éclairage principal comprend un panneau présentant des propriétés de diffusion de manière à être traversés par des rayonnements lumineux provenant du deuxième module d'éclairage ;
- le panneau est défini en tout ou partie autour de la zone d'intérêt notamment entre cette zone d'intérêt et le deuxième module d'éclairage ;
- un dispositif de surveillance de la tête des utilisateurs et un dispositif de mesure de la luminance perceptible par l'œil des utilisateurs ;
- ledit au moins un objet est un composant horloger ;
- le dispositif d'éclairage secondaire est agencé au-dessus du dispositif principal.

L'invention concerne également une pièce d'un bâtiment comprenant ce système.

### Brève description des figures

L'invention sera décrite ci-après de manière plus détaillée à l'aide des figures annexées, données à titre d'exemples nullement limitatifs, dans lesquelles :
- La figure 1 est une représentation schématique d'une pièce d'un bâtiment comprenant un système de gestion d'un éclairement d'une zone d'intérêt comprise dans un environnement de travail d'un utilisateur, la zone d'intérêt comprenant au moins un objet susceptible d'être manipulé par cet utilisateur, selon un mode de réalisation de l'invention ;
- La figure 2 représente des éléments constitutifs du système comprenant une première variante du dispositif d'éclairage principal comprenant uniquement un premier module d'éclairage, selon le mode de réalisation de l'invention ;
- La figure 3 représente les éléments constitutifs du système comprenant une deuxième variante du dispositif d'éclairage principal comprenant uniquement le premier module d'éclairage et un panneau présentant des propriétés de réflectance, selon le mode de réalisation de l'invention
- La figure 4 représente les éléments constitutifs du système comprenant une troisième variante du dispositif d'éclairage principal comprenant uniquement le premier module d'éclairage et un deuxième module d'éclairage ainsi qu'un panneau présentant des propriétés de réflectance et de diffusion, selon un mode de réalisation de l'invention, et
- La figure 5 représente un logigramme relatif à un procédé de gestion d'un éclairement d'une zone d'intérêt d'un environnement de travail d'un utilisateur, la zone d'intérêt comprenant au moins un objet susceptible d'être manipulé par cet utilisateur, selon un mode de réalisation de l'invention.

### Description détaillée de l'invention

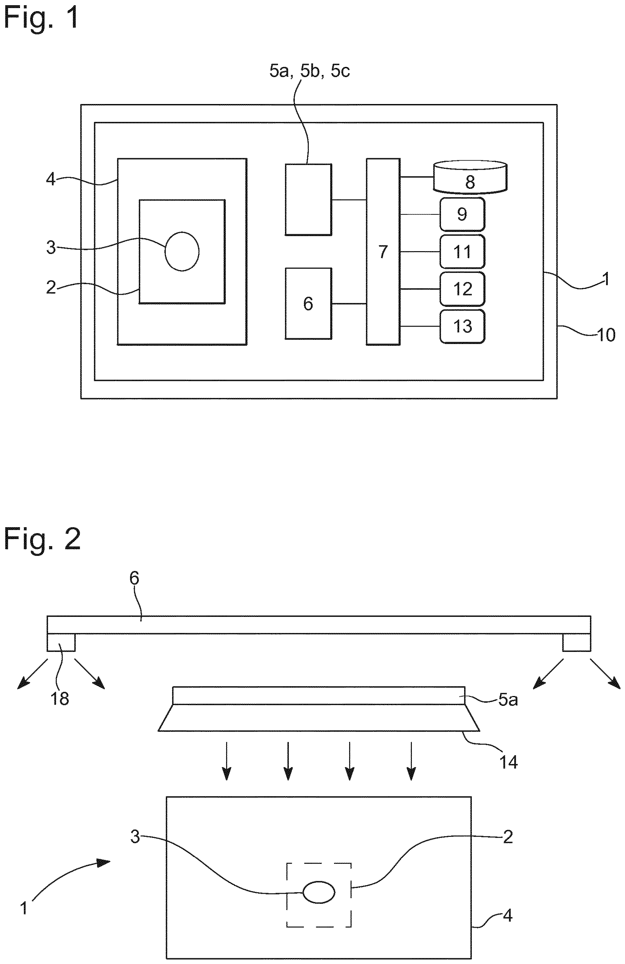

Sur la figure 1 est représenté un système de gestion d'un éclairement 1 d'une zone d'intérêt 2, compris dans un environnement de travail d'un utilisateur. Cet environnement de travail comprenant le système 1, est de préférence défini dans une pièce 10 d'un bâtiment. Autrement dit, dans cette pièce les seules sources lumineuses sont comprises dans le présent système 1 ou encore il peut y avoir dans cette pièce une source lumineuse comme la lumière du jour qui est plus ou moins diffuse. Un tel environnement de travail comporte un élément de support 4 tel qu'un bureau ou encore un établi, formé d'un plateau, notamment rectangulaire, prévu pour supporter au moins un objet 3 compris dans la zone d'intérêt 2 de cet environnement de travail. Un tel objet 3 est de manière non limitative et non exhaustive :
- un composant d'un mouvement horloger tel qu'une platine, un pont, une roue, un ressort, une masse, ou encore un composant d'habillage horloger, tel qu'un fond, un fermoir, une lunette, un cadran, un index de cadran guichet ;
- une pièce d'horlogerie telle qu'une montre ;
- une pièce de bijouterie.

Un tel système 1 participe à ce que l'utilisateur réalise à l'œil nu la détection de défauts fonctionnels, structurels ou esthétiques de l'objet 3 compris dans la zone d'intérêt 2 de son environnement de travail. Autrement dit, cet utilisateur effectue une telle détection ou identification de défaut à partir de la perception visuelle qu'il a de cet objet 3. Cette perception visuelle peut être définie comme étant le résultat de l'interprétation que fait le cerveau de cet utilisateur d'une information relative à cet objet 3 et qui est comprise dans un rayonnement lumineux capté par photoréception et entrant à travers ses pupilles de sorte à activer ses cellules réceptives qui se trouvent dans les rétines de ses yeux. Les signaux produits par ces cellules étant par la suite transmis par le nerf optique jusqu'au cerveau.

Ainsi que nous l'avons précédemment évoqué, cette zone d'intérêt 2 peut comprendre au moins un objet 3 susceptible d'être manipulé par l'utilisateur. Dans ce système 1, une telle zone d'intérêt 2 peut être :
- un espace défini sur le plateau de l'élément de support 4 lorsque l'objet 3 est déposé sur ce plateau et occupe alors une portion de la surface de ce plateau, ou
- un volume défini au-dessus de ce plateau et dans lequel est compris cet objet 3 lorsque qu'il est manipulé par l'utilisateur.

Une telle zone d'intérêt 2 est susceptible de bénéficier d'un éclairement particulier réalisé en fonction du profil de vision de l'utilisateur et/ou d'au moins une caractéristique de l'objet 3.

Un tel système 1 de gestion de l'éclairement de la zone d'intérêt 2 comprend un dispositif d'éclairage principal 5a, 5b, 5c et un dispositif d'éclairage secondaire 6 pourvus chacun d'une pluralité d'éléments électroluminescents. Dans une alternative chaque dispositif d'éclairage 5a, 5b, 5c, 6 peut comprendre un unique élément électroluminescent qui est couplé à un modulateur. Dans ce contexte, ce modulateur est apte à modifier le spectre lumineux de cette diode ainsi que l'intensité/amplitude, l'orientation et/ou le degré de directivité et/ou la diffusion du rayonnement lumineux de cette diode. Un élément électroluminescent comprend une diode électroluminescente et également dans une alternative une microlentille ou d'autres moyens optiques. On notera dans une variante qu'un élément électroluminescent peut être dépourvu d'une telle diode.

Sur les figures 2 à 4 sont décrites trois variantes de ce dispositif d'éclairage principal 5a, 5b, 5c. Dans une première variante illustrée sur la figure 2 le dispositif d'éclairage principal 5a comprend un unique module d'éclairage 14 nommé par la suite « premier module d'éclairage ». Ce premier module d'éclairage 14 est agencé au-dessus du plateau de l'élément de support 4 et en particulier au-dessus de la zone d'intérêt 2 et donc de l'objet 3 compris dans cette zone 2.

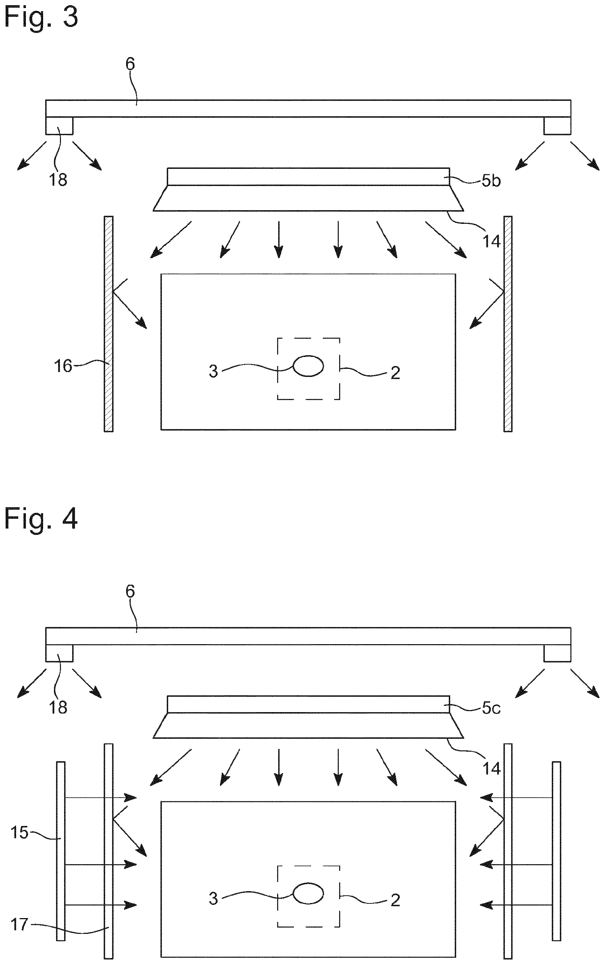

Dans une deuxième variante représentée sur la figure 3, le dispositif d'éclairage principal 5b comprend le premier module d'éclairage 14 agencé au-dessus du plateau de l'élément de support 4, et un panneau 16 présentant des propriétés de réflectance du rayonnement lumineux provenant de premier module d'éclairage 14 vers la zone d'intérêt 2. Dans cette configuration, le panneau 16 est défini en tout ou parti autour à la fois du premier module d'éclairage 14 et du plateau de l'élément de support 4. Ce panneau 16 s'étend verticalement en hauteur, du plateau horizontal de l'élément de support 4 jusqu'à un bord extérieur d'une paroi périphérique du premier module d'éclairage 14. On comprend qu'un passage est aménagé dans ce panneau 16 afin que l'utilisateur puisse avoir accès visuellement ou physiquement à l'objet 3 susceptible d'être posé sur le plateau, afin de pouvoir éventuellement le manipuler. Dans le cadre de l'accès physique, l'ouverture autorisant ce passage peut être permanente ou limitée dans le temps avec dans ce dernier cas, le panneau 16 qui est monté coulissant ou en rotation dans ce système afin de créer momentanément une telle ouverture. S'agissant de l'accès visuelle, une ouverture éventuellement pourvue d'un filtre peut être aménagée pour autoriser l'observation de l'objet, le filtre pouvant être polarisé et aussi modulable spectralement, spatialement, et temporellement.

Dans une troisième variante représentée sur la figure 4, le dispositif d'éclairage principal 5c comprend le premier module d'éclairage 14 agencé au-dessus du plateau de l'élément de support 4 ainsi qu'un deuxième module d'éclairage 15 et un panneau 17. Ce panneau 17 est défini en tout ou parti autour à la fois du premier module d'éclairage 14 et du plateau de l'élément de support 4. Un tel panneau 17 s'étend verticalement en hauteur, du plateau horizontal de l'élément de support 4 jusqu'au bord extérieur de la paroi périphérique du premier module d'éclairage 14. S'agissant du deuxième module d'éclairage 15, il est défini en tout ou parti autour de ce panneau 17 et s'étend verticalement en étant compris entre les hauteurs mesurées par rapport au sol du plateau horizontal et de la paroi périphérique du premier module d'éclairage 14. Dans cette configuration, le panneau 17 présente :
- des propriétés de réflectance du rayonnement lumineux provenant de premier module d'éclairage 14 vers la zone d'intérêt 2, et
- des propriétés de diffusion de manière à être traversés par des rayonnements lumineux provenant du deuxième module d'éclairage 15.

Dans cette troisième variante du dispositif d'éclairage principal 5c, on comprend qu'un passage est aménagé dans ce panneau 17 et dans le deuxième module d'éclairage 15 afin que l'utilisateur puisse avoir accès visuellement et/ou physiquement à l'objet 3, susceptible d'être posé sur le plateau, afin de pouvoir éventuellement le manipuler. Dans le cadre de l'accès physique, l'ouverture autorisant ce passage peut être permanente ou limitée dans le temps avec dans ce dernier cas, le panneau 17 et le deuxième module d'éclairage 15 qui sont montés coulissant ou en rotation dans ce système afin de créer momentanément une telle ouverture. S'agissant de l'accès visuelle, une ouverture éventuellement pourvue d'un filtre peut être aménagée pour autoriser l'observation de l'objet, le filtre pouvant être polarisé et aussi modulable spectralement, spatialement, et temporellement.

Le dispositif d'éclairage secondaire 6 comprend quant à lui un module d'éclairage 18 agencé à une hauteur mesurée en partant du niveau du sol qui est supérieure à celle du premier module d'éclairage 14 du dispositif d'éclairage principal 5a, 5b, 5c. Ce module d'éclairage 18 du dispositif d'éclairage secondaire 6 est situé au-dessus d'une zone périphérique du plateau de l'élément de support 4 et donc de la zone d'intérêt 2 comprenant l'objet 3. Ce module d'éclairage 18, génère un éclairage homogène dans l'environnement du plateau.

Ces deux dispositifs d'éclairage sont contrôlés par une unité de traitement 7 du système 1. Cette unité de traitement 7 qui peut être un ordinateur, comprend des ressources matérielles et logicielles en particulier au moins un processeur coopérant avec des éléments de mémoire. Cette unité de traitement 7 est apte à exécuter des instructions pour la mise en œuvre d'un programme d'ordinateur afin d'assurer la gestion de l'éclairement de la zone d'intérêt 2.

Le système 1 comprend aussi une base de données 8 à laquelle est connecté l'unité de traitement 7. Cette base de données 8 comprend notamment :
- des données de profil de vision des utilisateurs comprenant des données physiologiques et biologiques des utilisateurs ayant un rôle dans la perception visuelle ;
- des données de caractéristiques d'objets relatives aux caractéristiques physiques, chimiques, esthétiques, fonctionnelles et structurelles de cet objet 3 ;
- des données d'identification des utilisateurs ;
- des données d'identification des objets.

On notera que les données physiologiques et biologiques peuvent être relatives :
- à l'âge ;
- au genre de l'utilisateur,
- à des caractéristiques du système oculaire (sensibilité à l'éblouissement,) et
- à des caractéristiques du système nerveux de l'utilisateur ;
- à des caractéristiques de résistance et/ou d'endurance visuelle.

On notera que ces données physiologiques et biologiques des utilisateurs prennent en compte :
- la période de la journée par exemple pour tenir compte du rythme circadien relatif à l'utilisateur,
- la date et l'année où l'utilisateur utilise le système ;
- la géolocalisation du système et donc de la pièce comprenant le système,
- du spectre et de l'intensité de la lumière du jour dans le cas où la pièce où se trouve le système est baignée par une telle lumière, et
- les caractéristiques de sécurité photobiologique visuelle comprenant par exemple les normes/sécurités relatives à un temps d'exposition visuelle lié à une longueur d'onde lumineuse.

D'autre part, s'agissant des données d'identification des objets, on notera qu'elles peuvent comprendre des données de représentation bidimensionnelle ou tridimensionnelle de ces objets décrivant notamment la forme, les dimensions et ou l'aspect esthétique de chaque objet 3 ainsi que des données relatives à la nature de la matière constituant cet objet 3. Ces données peuvent également comprendre des données d'information du type code barre bidimensionnel ou tridimensionnel qui peuvent être présents sur l'objet 3.

Un tel système 1 comprend également :
- un dispositif d'identification des utilisateurs 9 du système 1 prévu pour participer à la mise en œuvre d'une identification ou authentification de l'utilisateur à partir de technologies bien connues de l'état de la technique, relatives à une authentification biométrique ou encore à de la radio authentification et ce, à partir des données d'identification d'utilisateurs archivées dans la base de données 8 ;
- un dispositif d'identification d'objets 11 mettant en œuvre des systèmes de capture d'au moins une image, associés à des algorithmes de traitement numérique d'images. Un tel dispositif participe à l'identification des objets 3 à partir des données d'identification d'objets archivées dans la base de données 8 ;
- un dispositif de surveillance de la tête 12 des utilisateurs comprenant des systèmes de capture d'au moins une image, associés à des algorithmes de traitement numérique d'images ainsi qu'un oculomètre ou un pupillométrie, ce dispositif est apte à :
   - déterminer des mouvements et postions de la tête de l'individu ;
   - interpréter des expressions particulières du visage des utilisateurs ;
   - identifier des changements d'expression du visage des utilisateurs ;
   - mesurer et enregistrer les trajets oculaires des utilisateurs en déterminant par exemple la direction ou l'orientation du regard de l'utilisateur relativement à l'objet 3.
- un dispositif de mesure de la luminance 13 de l'objet 3, perceptible par l'œil des utilisateurs. Ce dispositif comprend donc un luminancemètre, un pupillomètre et un oculomètre.

Un tel système peut aussi comprendre un dispositif de mesure de paramètres physiologiques et/ou biologiques de l'utilisateur. Pour ce faire ce dispositif peut comporter par exemple un bracelet porté par l'utilisateur pourvu de capteurs d'activité tels que qu'un capteur cardiaque, un détecteur de mouvement ou encore un capteur de géolocalisation. Un tel dispositif génère des données qui sont susceptibles d'être transmises à l'unité de traitement.

Dans ce système 1, l'unité de traitement 7 est relié aux dispositifs d'identification 9, 11 des utilisateurs et des objets, au dispositif de surveillance de la tête 12 des utilisateurs, au dispositif de mesure de la luminance 13 ainsi qu'au dispositif de mesure de paramètres physiologiques et/ou biologiques.

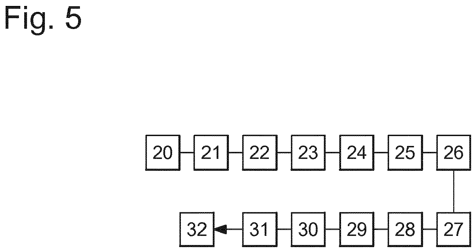

En référence à la figure 5, un tel système 1 est prévu pour mettre en œuvre un procédé de gestion de l'éclairement de la zone d'intérêt 2 comprenant ledit au moins un objet 3 susceptible d'être manipulé par l'utilisateur, ledit éclairement étant réalisé par le dispositif d'éclairage principal 5a, 5b, 5c et le dispositif d'éclairage secondaire 6.

Ce procédé comprend une étape d'identification 20 de l'utilisateur et/ou de l'objet 3. Une telle étape 20, selon la configuration choisie pour le fonctionnement de ce procédé, vise à identifier uniquement l'utilisateur ou uniquement l'objet 3, ou encore l'utilisateur et l'objet 3. Dans ce contexte, l'identification de l'utilisateur est alors réalisée par l'unité de traitement 7 et le dispositif d'authentification ainsi qu'à partir des données d'authentification utilisateurs archivées dans la base de données 8 du système 1. De même, l'indentification de l'objet 3 est effectuée à partir de cette unité de traitement 7 qui coopère avec le dispositif d'identification 11 d'objets, en utilisant pour ce faire les données d'identification d'objets archivées dans ce serveur.

Une fois l'utilisateur et/ou l'objet 3 identifié, le procédé comprend une étape de configuration 21 de l'éclairement de la zone d'intérêt 2 en fonction du profil de l'utilisateur identifié relatif à la vision et/ou d'au moins une caractéristique de l'objet 3 identifié. Cette étape de configuration 21 comprend une sous-étape de génération 22 d'une instruction de pilotage des propriétés d'éclairage du dispositif d'éclairage principal 5a, 5b, 5c et/ou du dispositif d'éclairage secondaire 6 en fonction de critères de perception visuel de l'objet 3 par l'utilisateur. Les propriétés d'éclairage des dispositifs d'éclairage principal et secondaire, comprennent :
- le spectre lumineux de chaque diode électroluminescente constituant chacun de ces dispositifs d'éclairage ;
- l'intensité/amplitude du rayonnement lumineux de chaque diode électroluminescente constituant chacun de ces dispositifs d'éclairage ;
- l'orientation et/ou le degré de directivité et/ou la diffusion du rayonnement lumineux produit par l'ensemble des diodes électroluminescentes constituant chacun de ces dispositifs d'éclairage, comme par exemple une sphère intégrante.

Dans ce procédé, la sous-étape de génération 22 comprend une phase d'évaluation 23 des critères de perception visuelle à partir des données de profil de vision relatives à l'utilisateur identifié et/ou de données de caractéristiques relatives à l'objet 3 identifié. De tels critères de perception visuelle peuvent donc être évalués uniquement à partir des données de profil de vision de l'utilisateur identifié ou uniquement à partir des données de caractéristiques relatives l'objet 3 identifié ou encore uniquement à partir des données de profil de vision et des données de caractéristiques lorsque l'utilisateur et l'objet 3 ont tous deux été identifiés. Ces critères de perception visuelle visent à caractériser/quantifier une perception visuelle optimale de l'utilisateur en fonction, lorsqu'il a été identifié, de ses données de profil telles que les données physiologiques et biologiques, et des données de caractéristiques de l'objet 3 lorsque ce dernier a été identifié.

La sous-étape de génération 22 comprend ensuite une phase de détermination 24 d'une configuration des propriétés d'éclairage du dispositif d'éclairage principal 5a, 5b, 5c et/ou du dispositif d'éclairage secondaire 6 en fonction de ces critères de perception visuelle. Par la suite, l'unité de traitement 7 produit à partir de la configuration ainsi déterminée, l'instruction de pilotage des propriétés d'éclairage du dispositif d'éclairage principal 5a, 5b, 5c et/ou du dispositif d'éclairage secondaire 6.

Cette étape de configuration 21 prévoit ensuite une sous-étape de contrôle 25 du dispositif d'éclairage principal 5a, 5b, 5c et/ou du dispositif d'éclairage secondaire 6 en fonction de l'instruction de pilotage des propriétés d'éclairage. Durant la réalisation de cette sous-étape 25, l'unité de traitement 7 exécute l'instruction de pilotage des propriétés d'éclairage du dispositif d'éclairage principal 5a, 5b, 5c et/ou du dispositif d'éclairage secondaire 6, précédemment générée. Une telle sous-étape 25 comprend une phase de modification 26 des propriétés d'éclairage suivantes des dispositifs d'éclairage principal et secondaire a, 5b, 5c, 6 en fonction de ladite instruction de pilotage :
- du spectre lumineux et/ou de l'intensité/amplitude du rayonnement lumineux de tout ou partie des diodes électroluminescentes du dispositif d'éclairage principal 5a, 5b, 5c et/ou du dispositif d'éclairage secondaire 6 ;
- de l'orientation et/ou le degré de directivité et/ou la diffusion du rayonnement lumineux émanant du dispositif d'éclairage principal 5a, 5b, 5c et/ou du dispositif d'éclairage secondaire 6 par exemple à partir de.
   - l'extinction sélective ou l'allumage sélectif de diodes électroluminescentes du dispositif d'éclairage principal 5a, 5b, 5c et/ou du dispositif d'éclairage secondaire 6, ou
   - l'orientation du rayonnement lumineux du dispositif principal et/ou du dispositif d'éclairage secondaire 6, dont les diodes sont chacune pourvue par exemple d'une microlentille ou d'autres moyens optiques.

Le procédé comprend aussi une étape de réévaluation 27 des critères de perception visuelle de l'objet 3 par l'utilisateur. Une telle étape 27 comprend une sous-étape d'identification 28 d'un état de fatigue et/ou d'une gêne visuelle de l'utilisateur susceptible d'altérer la perception visuelle par cet utilisateur de l'objet 3. Un tel état de fatigue et/ou de gêne visuelle peut par exemple engendrer ou être la cause d'une perte d'attention ou, d'un manque ou d'une perte de concentration de cet utilisateur. Dans ce contexte, un état de fatigue de l'utilisateur ou encore une gêne visuelle peut être engendré par un éclairement de la zone d'intérêt 2 et plus particulièrement de l'objet 3, qui n'est pas adapté. Dans le cadre de la mise en œuvre de cette sous- étape 28, l'unité de traitement 7 effectue un traitement des données, en ce sens, qu'il reçoit des dispositifs suivants :
- le dispositif de surveillance de la tête 12 de l'utilisateur ;
- le dispositif de mesure de la luminance 13 résultant d'une partie d'une surface de l'objet 3 sur laquelle se porte ou est posé le regard de l'utilisateur ;
- le dispositif de mesure de paramètres physiologiques et/ou biologiques de l'utilisateur.

Dans ce contexte, le dispositif de surveillance transmet des données telles qu'une image ou une séquence d'images ou encore une vidéo du visage de l'utilisateur sur base desquelles données l'unité de traitement 7 réalise un traitement numérique permettant par exemple de détecter une expression particulière de ce visage telle qu'un clignotement de paupière indiquant un état de fatigue ou une gêne visuelle par le froncement des sourcilles. S'agissant du dispositif de mesure de la luminance 13, il transmet à l'unité de traitement 7 des données de mesure de luminance relatives à la partie de la surface de l'objet 3 sur laquelle se porte ou est posé le regard de l'utilisateur, et détermine par exemple en fonction d'une valeur de référence de luminance si la ou les mesures effectuées révèlent une gêne visuelle de l'utilisateur engendrée par un éclairage de la zone d'intérêt 2 et plus particulièrement de cette partie de la surface de l'objet 3 qui n'est pas adapté. Concernant le dispositif de mesure de paramètres physiologiques et/ou biologiques de l'utilisateur, il transmet à l'unité de traitement des données de mesure de l'état physiologique et/ou biologique de l'utilisateur.

Cette étape de réévaluation 27 comprend également une sous-étape de correction 29 des critères de perception visuelle si un état de fatigue et/ou une gêne visuelle de l'utilisateur est identifié. Une telle sous-étape 29 comprend une phase de réalisation d'opérations de calcul par l'unité de traitement 7 visant à modifier les valeurs de ces critères de perception visuelle à partir d'un indice de correction caractérisant le niveau de l'état de fatigue et/ou de gêne visuelle de l'utilisateur qui a été détecté lors de la sous-étape d'identification 28.

Une telle étape de réévaluation 27 est exécutée périodiquement et ce, selon :
- un intervalle de temps prédéfini qui est configurable ;
- une détection d'un changement de direction/d'orientation du regard de l'utilisateur relativement à l'objet 3 ;
- une détection d'une manipulation de l'objet 3 ;
- une détection d'un déplacement de l'objet 3 ;
- une détection d'un changement d'au moins une propriété optique de l'objet 3 ;
- une détection d'une observation par l'utilisateur d'une nouvelle partie de la surface de l'objet 3 ;
- une détection d'une variation d'au moins un paramètre physiologique et biologique de l'utilisateur

Le procédé comprend à la suite de cette étape de réévaluation 27, une étape de configuration 30 d'un éclairement de la zone d'intérêt 2 en fonction des critères de perception visuelle réévalués. Cette étape de configuration 30 comprend une sous-étape de génération 31 d'une nouvelle instruction de pilotage des propriétés d'éclairage du dispositif d'éclairage principal 5a, 5b, 5c et/ou du dispositif d'éclairage secondaire 6 en fonction de ces critères de perception visuelle réévalués de l'utilisateur. Ensuite cette étape 30 comprend une sous-étape de contrôle 32 du dispositif d'éclairage principal 5a, 5b, 5c et/ou du dispositif d'éclairage secondaire 6 en fonction du la nouvelle instruction de pilotage des propriétés d'éclairage. Durant la réalisation de cette étape 30, l'unité de traitement 7 exécute cette nouvelle instruction de pilotage des propriétés d'éclairage du dispositif d'éclairage principal 5a, 5b, 5c et/ou du dispositif d'éclairage secondaire 6, précédemment générée.

L'invention concerne aussi une pièce 10 d'un bâtiment comprenant un tel système 1.

## Revendications

1. Procédé de gestion d'un éclairement d'une zone d'intérêt (2) comportant au moins un objet (3) susceptible d'être manipulé par un utilisateur, ledit éclairement étant réalisé par un dispositif d'éclairage principal (5a, 5b, 5c) et un dispositif d'éclairage secondaire (6) pourvus tous deux d'éléments électroluminescents, le procédé comprenant les étapes suivantes :
- identification (20) dudit utilisateur et/ou de l'objet (3) ;
- configuration (21) de l'éclairement de la zone d'intérêt (2) en fonction du profil de l'utilisateur identifié relatif à la vision et/ou d'au moins une caractéristique de l'objet (3) identifié, ladite étape comprenant les sous-étapes suivantes :
• génération (22) d'une instruction de pilotage des propriétés d'éclairage du dispositif d'éclairage principal (5a, 5b, 5c) et/ou du dispositif d'éclairage secondaire (6) en fonction de critères de perception visuelle de l'objet (3) par l'utilisateur ;
• contrôle (25) du dispositif d'éclairage principal (5a, 5b, 5c) et/ou dudit dispositif d'éclairage secondaire (6) en fonction de ladite instruction de pilotage des propriétés d'éclairage.

2. Procédé selon la revendication précédente, **caractérisé en ce que** la sous-étape de génération (22) comprend une phase d'évaluation (23) des critères de perception visuelle à partir de données de profil de vision relatives à l'utilisateur identifié et/ou de données de caractéristiques relatives l'objet (3) identifié.

3. Procédé selon la revendication précédente, **caractérisé en ce que** la sous-étape de génération (22) comprend une phase de détermination (24) d'une configuration des propriétés d'éclairage du dispositif d'éclairage principal (5a, 5b, 5c) et/ou du dispositif d'éclairage secondaire (6) en fonction de ces critères de perception visuelle.

4. Procédé selon l'une quelconque des revendications précédentes, **caractérisé en ce que** la sous-étape de contrôle (25) comprend une phase de modification (26) des propriétés d'éclairage des dispositifs d'éclairage principal et secondaire en fonction de ladite instruction de pilotage.

5. Procédé selon l'une quelconque des revendications précédentes, **caractérisé en ce qu'**il comprend une étape de réévaluation (27) de ces critères de perception visuelle de l'objet (3) par l'utilisateur comportant une sous-étape d'identification (28) d'un état de fatigue et/ou d'une gêne visuelle de l'utilisateur susceptible d'altérer sa perception visuelle de l'objet (3).

6. Procédé selon la revendication précédente, **caractérisé en ce que** l'étape de réévaluation (27) comprend une sous-étape de correction (29) des critères de perception visuelle si un état de fatigue et/ou une gêne visuelle de l'utilisateur est identifié.

7. Procédé selon l'une quelconque des revendications précédentes, **caractérisé en ce que** les propriétés d'éclairage des dispositifs d'éclairage principal et secondaire, comprennent :
- un spectre lumineux de chaque élément électroluminescent constituant chacun de ces dispositifs d'éclairage ;
- une intensité/amplitude du rayonnement lumineux de chaque d'élément électroluminescent constituant chacun de ces dispositifs d'éclairage ;
- une orientation et/ou une diffusion du rayonnement lumineux produit par l'ensemble des éléments électroluminescents constituant chacun de ces dispositifs d'éclairage.

8. Système (1) de gestion d'un éclairement d'une zone d'intérêt (2) comportant au moins un objet (3) susceptible d'être manipulé par un utilisateur mettant en œuvre le procédé selon l'une quelconque des revendications précédentes, comprenant :
- un dispositif d'éclairage principal (5a, 5b, 5c) et un dispositif d'éclairage secondaire (6) aptes à réaliser ledit éclairement et qui sont pourvus tous deux d'éléments électroluminescents, et
- une unité de traitement (7) reliée à des dispositifs d'identification (9, 11) des utilisateurs et des objets ainsi qu'à une base de données (8) comprenant des données de profil de vision d'utilisateurs, des données de caractéristiques d'objets et des données d'identification d'utilisateurs et d'objets.

9. Système (1) selon la revendication précédente, **caractérisé en ce que** le dispositif d'éclairage principal (5a, 5b, 5c) comprend un premier module d'éclairage (14) et/ou un deuxième module d'éclairage (15) pourvus tous les deux :
• d'une pluralité d'éléments électroluminescents, ou
• d'un unique élément électroluminescent qui est couplé à un modulateur.

10. Système (1) selon la revendication précédente, **caractérisé en ce que** le premier module d'éclairage (14) est agencé au-dessus de la zone d'intérêt (2) notamment au plus près de cette zone et le deuxième module d'éclairage (15) est défini en tout ou partie autour de la zone d'intérêt (2).

11. Système (1) selon l'une quelconque des revendications 9 et 10, **caractérisé en ce que** le dispositif d'éclairage principal (5b) comprend un panneau (16) présentant des propriétés de réflectance du rayonnement lumineux provenant du premier module d'éclairage (14) vers la zone d'intérêt (2).

12. Système (1) selon l'une quelconque des revendications 9 et 11, **caractérisé en ce que** le dispositif d'éclairage principal (5c) comprend un panneau (17) présentant des propriétés de diffusion de manière à être traversés par des rayonnements lumineux provenant du deuxième module d'éclairage (15).

13. Système (1) selon l'une quelconque des revendications 11 et 12, **caractérisé en ce que** le panneau est défini en tout ou partie autour de la zone d'intérêt (2) notamment entre cette zone d'intérêt (2) et le deuxième module d'éclairage (15).

14. Système (1) selon l'une quelconque des revendications 8 à 13, **caractérisé en ce qu'**il comprend un dispositif de surveillance de la tête (12) des utilisateurs et un dispositif de mesure de la luminance (13) perceptible par l'œil des utilisateurs.

15. Système (1) selon l'une quelconque des revendications 8 à 14, **caractérisé en ce que** ledit au moins un objet (3) est un composant horloger.

16. Système (1) selon l'une quelconque des revendications 8 à 15, **caractérisé en ce que** le dispositif d'éclairage secondaire (6) est agencé au-dessus du dispositif principal.

17. Pièce (10) d'un bâtiment comprenant le système (1) selon l'une quelconque des revendications 8 à 16.
